# EUROPEAN PATENT APPLICATION

(11) **EP 4 844 625 A1**
(43) Date of publication of application: **25.11.2026**
(21) Application number: 24923545.8
(22) Date of filing: 18.12.2024
(51) Int. Cl.: G06F 30/32, H01L 25/065, H10B 80/00

(54) **CHIP, PROCESSING APPARATUS AND ELECTRONIC DEVICE**

(30) Priority: 06.02.2024 CN 202410174779
(71) Applicant: Huawei Technologies Co., Ltd., Shenzhen, Guangdong 518129 (CN)
(72) Inventor: ZHANG, Xianfu, Shenzhen, Guangdong 518129 (CN); ZHANG, Chengmin, Shenzhen, Guangdong 518129 (CN)
(74) Representative: Maiwald GmbH
(86) International application number: PCT/CN2024/140420
(87) International publication number: WO 2025/167343

(57) **Abstract**

This application relates to the field of chip technologies, relates to a chip, a processing apparatus, and an electronic device, and provides a die partitioning manner in a chiplet. The chip includes a first die and a second die. The first die includes a physical coding sublayer PCS circuit, and the second die includes a physical medium attachment PMA sublayer circuit and a physical medium dependent PMD circuit. The PCS circuit of the first die is coupled to the PMA circuit of the second die, and the PMA circuit is coupled to the PMD circuit.

## Description

This application claims priority to Chinese Patent Application No. 2024101747792, filed with the China National Intellectual Property Administration on February 6, 2024 and entitled "CHIP, PROCESSING APPARATUS, AND ELECTRONIC DEVICE", which is incorporated herein by reference in its entirety.

### TECHNICAL FIELD

Embodiments of this application relate to the field of chip technologies, and in particular, to a chip, a processing apparatus, and an electronic device.

### BACKGROUND

In chiplet technology, a chip is partitioned into a plurality of dies (Die), and then the plurality of dies are packaged together to form a chip. The chiplet technology has advantages such as flexible design, low costs, and short research and development cycles. In the chiplet technology, how to partition dies needs to be considered.

### SUMMARY

This application provides a chip, a processing apparatus, and an electronic device, and provides a die partitioning manner in a chiplet.

According to a first aspect, a chip is provided. The chip includes a first die and a second die. The first die includes a physical coding sublayer (physical coding sublayer, PCS) circuit, and the second die includes a physical medium attachment sublayer (physical medium attachment sublayer, PMA) circuit and a physical medium dependent (physical medium dependent sublayer, PMD) circuit. The PCS circuit of the first die is coupled to the PMA circuit of the second die, and the PMA circuit is coupled to the PMD circuit.

In the foregoing technical solution, a die partitioning manner in a chiplet is provided. A plurality of circuits are split onto different dies, and different dies may use different manufacturing processes. For example, the second die may use a mature manufacturing process, so that hardware costs are low. In addition, the first die may be used together with a plurality of second dies, and a quantity of first dies and a quantity of second dies may be selected based on a scenario, so that design flexibility is high. In addition, the second die includes only the PMA circuit and the PMD circuit that are irrelevant to functional logic, so that flexible reuse between different dies can be implemented at low costs. The PMA circuit and the PMD circuit are circuits irrelevant to functional logic, and are configured to be coupled to a link on which any one of a plurality of functions is located. The PCS circuit is a circuit relevant to functional logic, and is configured to be coupled to a link on which a function corresponding to the PCS circuit is located. The circuit relevant to functional logic and the circuit irrelevant to functional logic are split onto different dies. Taking a modular device scenario used as an example, no external board routing crossover occurs for the chip, and no internal routing crossover occurs for the chip. This can reduce hardware costs, and facilitate reuse of the first die with the plurality of second dies.

In a possible implementation of the first aspect, the PCS circuit includes a PCS transmit circuit and a PCS receive circuit, the PMA circuit includes a PMA transmit circuit and a PMA receive circuit, and the PMD circuit includes a PMD transmit circuit and a PMD receive circuit. The PCS transmit circuit is coupled to the PMA transmit circuit, and the PMA transmit circuit is coupled to the PMD transmit circuit. The PCS receive circuit is coupled to the PMA receive circuit, and the PMA receive circuit is coupled to the PMD receive circuit. In the foregoing possible implementation, the PCS circuit, the PMA circuit, and the PMD circuit each include a transmit side and a receive side, and the PMA transmit circuit, the PMA receive circuit, the PMD transmit circuit, and the PMD receive circuit are all located on different dies from the PCS transmit circuit and the PCS receive circuit. This can reduce hardware costs, enhance design flexibility, and facilitate reuse of the first die with the plurality of second dies.

In a possible implementation of the first aspect, the first die or the second die further includes a functional circuit. The PCS circuit is coupled to the PMA circuit through the functional circuit. In the foregoing possible implementation, another functional circuit may be further included between the PCS circuit and the PMA circuit. The functional circuit may be disposed based on an application requirement. In this way, a function of the chip can be more flexibly set.

In a possible implementation of the first aspect, the functional circuit includes a forward error correction (forward error correction, FEC) circuit. In the foregoing possible implementation, the FEC circuit is included between the PCS circuit and the PMA circuit, so that a bit error rate can be reduced. If the FEC circuit is disposed on the second die, and the second die uses the mature manufacturing process, costs of the chip can be further reduced. If the FEC circuit is disposed on the first die, the first die may use the advanced manufacturing process, or the FEC circuit may also use the advanced manufacturing process, to improve performance of the chip.

In a possible implementation of the first aspect, the FEC circuit includes an FEC transmit circuit and an FEC receive circuit. The PCS transmit circuit is coupled to the PMA transmit circuit through the FEC transmit circuit. The PCS receive circuit is coupled to the PMA receive circuit through the FEC receive circuit. In the foregoing possible implementation, the FEC circuit includes a transmit side and a receive side, and a bit error rate can be reduced for both a transmit link and a receive link in the chip. If the FEC transmit circuit and the FEC receive circuit are disposed on the second die, and the second die uses the mature manufacturing process, costs of the chip can be further reduced. If the FEC transmit circuit and the FEC receive circuit are disposed on the first die, the first die may use the advanced manufacturing process, or the FEC transmit circuit and the FEC receive circuit may also use the advanced manufacturing process, to improve performance of the chip.

In a possible implementation of the first aspect, the first die or the second die further includes a feedback circuit. The FEC receive circuit is coupled to the feedback circuit, and the feedback circuit is coupled to the PMD receive circuit. The FEC receive circuit is configured to send, when a bit error rate obtained through forward error correction is not 0, bit error information to the PMD receive circuit through the feedback circuit, where the feedback circuit is a serial interface. In the foregoing possible implementation, the bit error information needs to be transmitted with a large bit error rate. To avoid a waste of an inter-chip bandwidth, the feedback circuit for transmitting the bit error information is set as a serial interface, and the bit error information is sent in a form of serial data, so that a bandwidth for data transmission between the dies can be reduced.

In a possible implementation of the first aspect, the first die further includes a medium access control (medium access control, MAC) circuit. The MAC circuit is coupled to the PCS circuit. In the foregoing possible implementation, if both the first die and the second die use the mature manufacturing process, the MAC circuit may be decoupled from a die using the advanced manufacturing process (the die using the advanced manufacturing process provides better performance than the die using the mature manufacturing process), thereby further reducing costs and improving design flexibility. If the first die uses the advanced manufacturing process, and the second die uses the mature manufacturing process, more circuits such as the MAC circuit are disposed on the first die as much as possible, so that performance of the chip can be improved, and a package size can be reduced.

In a possible implementation of the first aspect, the MAC circuit includes a MAC transmit circuit and a MAC receive circuit. The MAC transmit circuit is coupled to the PCS transmit circuit. The MAC receive circuit is coupled to the PCS receive circuit. In the foregoing possible implementation, the MAC circuit includes a transmit side and a receive side, and both the MAC transmit circuit and the MAC receive circuit are disposed in the first die, so that hardware costs are low and design flexibility is high. If the first die uses the advanced manufacturing process, the MAC transmit circuit and the MAC receive circuit may also use the advanced manufacturing process, to improve performance of the chip.

In a possible implementation of the first aspect, the first die or the second die further includes an adjustment circuit, and the PMA transmit circuit further includes a buffer. The MAC transmit circuit is coupled to the adjustment circuit, and the adjustment circuit is coupled to the PMA transmit circuit. The buffer is configured to store, in a process in which the MAC transmit circuit sends data to the PMA transmit circuit through the PCS transmit circuit, the data. The PMA transmit circuit is configured to control, through the adjustment circuit when an amount of the data stored in the buffer is greater than a preset value, the MAC transmit circuit to reduce a bandwidth for sending data. In the foregoing possible implementation, the adjustment circuit is disposed, so that when the amount of the data stored in the buffer of the PMA transmit circuit is greater than the first preset value, a bandwidth of a transmit side of the first die is adjusted, to alleviate a problem that the first die has an excessively large data traffic and the second die cannot process data in time.

In a possible implementation of the first aspect, the first die further includes a first interface circuit, and the second die further includes a second interface circuit. The first interface circuit is coupled to the second interface circuit, and the first die is coupled to the second die through the first interface circuit and the second interface circuit. In the foregoing possible implementation, the first die is coupled to the second die through the first interface circuit and the second interface circuit, and the first die and the second die may communicate with each other through the first interface circuit and the second interface circuit, to establish a basis for communication between the first die and the second die.

According to a second aspect, a processing apparatus is provided. The apparatus includes a printed circuit board and the chip provided in any one of the first aspect or the possible implementations of the first aspect.

According to a third aspect, an electronic device is provided. The electronic device includes a housing and the processing apparatus provided in the second aspect.

It may be understood that any processing apparatus or electronic device provided above may be used in the corresponding chip provided above. Therefore, for beneficial effect that can be achieved by the processing apparatus or the electronic device, refer to beneficial effect in the corresponding chip provided above. Details are not described herein again.

### BRIEF DESCRIPTION OF DRAWINGS

FIG. 1A and FIG. 1B are diagrams of a chiplet technology according to an embodiment of this application;
FIG. 2 is a diagram of an open system interconnection reference model according to an embodiment of this application;
FIG. 3 is a diagram of a function of a physical medium attachment sublayer circuit according to an embodiment of this application;
FIG. 4 is a diagram of an electronic device according to an embodiment of this application;
FIG. 5 is a diagram of a first chip according to an embodiment of this application;
FIG. 6A and FIG. 6B are diagrams of a first interface die according to an embodiment of this application;
FIG. 7 is a diagram of a second chip according to an embodiment of this application;
FIG. 8 is a diagram 1 of a third chip according to an embodiment of this application;
FIG. 9 is a diagram of a second die according to an embodiment of this application;
FIG. 10 is a diagram 2 of a third chip according to an embodiment of this application;
FIG. 11A to FIG. 11C are a diagram 3 of a third chip according to an embodiment of this application;
FIG. 12 is a diagram 4 of a third chip according to an embodiment of this application;
FIG. 13 is a diagram 5 of a third chip according to an embodiment of this application;
FIG. 14A and FIG. 14B are a diagram 6 of a third chip according to an embodiment of this application;
FIG. 15 is a diagram 7 of a third chip according to an embodiment of this application; and
FIG. 16 is a diagram 8 of a third chip according to an embodiment of this application.

### DESCRIPTION OF EMBODIMENTS

In embodiments of this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. "At least one of the following items (pieces)" or a similar expression thereof means any combination of these items, including any combination of singular items (pieces) or plural items (pieces). For example, at least one item (piece) of a, b, or c may represent a, b, c, a and b, a and c, b and c, or a, b, and c, where a, b, and c may be singular or plural. The character "/" generally indicates an "or" relationship between the associated objects. In addition, in embodiments of this application, terms such as "first" and "second" do not limit a quantity or an execution sequence.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In embodiments of this application, words such as "first" and "second" are merely used to distinguish between features of a same type, and cannot be understood as indicating relative importance, a quantity, a sequence, or the like.

In embodiments of this application, terms such as "coupling" and "connection" should be understood in a broad sense. For example, the term may refer to a physical direct connection, or may refer to an indirect connection implemented through an electronic component, for example, a connection implemented through a resistor, an inductor, a capacitor, or another electronic component.

First, some basic concepts in embodiments of this application are explained and described.

### 1. System-on-a-chip (system-on-a-chip, SoC) technology and chiplet (chiplet) technology

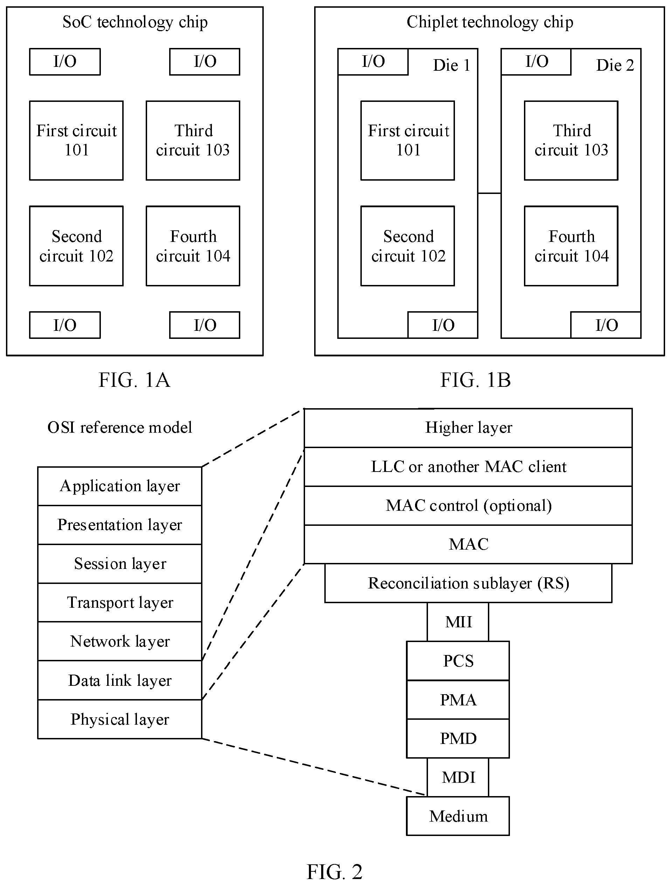

In the SoC technology, a plurality of circuits with different functions are manufactured on a same die (Die) in a photolithography form. As shown in FIG. 1A, a first circuit 101, a second circuit 102, a third circuit 103, and a fourth circuit 104 form an SoC technology chip, and the SoC technology chip may further include a plurality of input/output (input/output, I/O) interfaces. Each of the first circuit 101, the second circuit 102, the third circuit 103, and the fourth circuit 104 may be coupled to an external device through four I/O interfaces in the SOC technology chip.

In the chiplet technology, as opposed to the SOC technology, a chip with rich functions and a large area is split into a plurality of dies, and then the plurality of dies are packaged together to ultimately form a chip. As shown in FIG. 1B, the chiplet technology chip is split into two dies: a die 1 and a die 2. The first circuit 101 and the second circuit 102 are manufactured on the die 1, and the third circuit 103 and the fourth circuit 104 are manufactured on the die 2. The die 1 and the die 2 are coupled through an interconnection interface. The die 1 and the die 2 each may further include a plurality of I/O interfaces. Each of the first circuit 101 and the second circuit 102 may be coupled to an external device through two I/O interfaces in the die 1, and each of the third circuit 103 and the fourth circuit 104 may be coupled to an external device through two I/O interfaces in the die 2.

The SOC technology is highly dependent on a process. For example, as a chip manufacturing process becomes advanced, a chip process is upgraded from 28 nanometers to 10 nanometers, 7 nanometers, 5 nanometers, or even smaller. However, the nanometer process is approaching a physical limit, and a new technical route needs to be found to improve the chip process. Therefore, advantages of the chiplet technology are reflected. First, in a process of processing a wafer of a chip, a longer distance away from a center of the wafer indicates a higher probability of a defect, a larger size of the wafer, and a higher defect rate. In the chiplet technology, one chip is divided into a plurality of dies with smaller areas, which helps improve a yield rate and reduce manufacturing costs. Second, the entire chip in the SOC technology needs to use an advanced manufacturing process, while the chip in the chiplet technology may use different manufacturing processes for different dies. For example, an advanced manufacturing process may be used for a die on which a logic computing circuit is located, and a mature manufacturing process may be used for an interface die. Compared with the mature manufacturing process, the advanced manufacturing process has higher costs and better chip performance. In addition, a smaller nanometer process indicates a more complex design and higher costs of an SOC chip, and higher design flexibility of the chiplet technology. Therefore, the chiplet technology has advantages such as flexible design, low costs, and short research and development cycles.

### 2. Open system interconnection (open system interconnection, OSI) reference model

The OSI reference model is a standard system developed by the International Organization for Standardization for interconnection between computers or communication systems, which is generally referred to as the OSI reference model or seven-layer model. The OSI reference model is a seven-layer and abstract model, includes a series of abstract terms or concepts, and also includes specific protocols. As shown in FIG. 2, the OSI reference model may include an application (application) layer, a presentation (presentation) layer, a session (session) layer, a transport (transport) layer, a network (network) layer, a data link (data link) layer, and a physical (physical, PHY) layer.

The application layer may be configured to provide an interface between a network service and a user. The presentation layer may be responsible for data representation, security, and compression. The session layer may be configured to establish, manage, and terminate a session. The transport layer may be configured to define a protocol port number for data transmission, flow control, and error check. The network layer may be configured to perform logical address addressing to implement path selection between different networks. The data link layer may be configured to perform functions such as logical connection establishment, hardware address addressing, and error check. The physical layer may be configured to establish, maintain, and disconnect a physical connection.

The institute of electrical and electronics engineers (institute of electrical and electronics engineers, IEEE) 802.3 standard defines an implementation from the data link layer to the PHY layer. As shown in FIG. 2, the data link layer may include a logical link control (logical link control, LLC) layer, a medium access control (medium access control, MAC) layer, and the like. For example, an upper part of the data link layer may include the LLC layer or another MAC client, and a lower part of the data link layer may include the MAC layer. Optionally, MAC control may be further set between the LLC layer and the MAC layer, and a physical layer signaling (physical layer signaling, PLS) sublayer (not shown in the figure) may be further disposed below the MAC layer. The PHY layer may include a reconciliation sublayer (reconciliation sublayer, RS), a medium independent interface (medium independent interface, MII), a physical coding sublayer (physical coding sublayer, PCS), a physical medium attachment sublayer (physical medium attachment sublayer, PMA), a physical medium dependent sublayer (physical medium dependent sublayer, PMD), a medium dependent interface (medium dependent interface, MDI), and the like. The PHY layer may be coupled to a medium (medium) layer.

A transmit side of the MAC layer may be configured to package a data packet from the LLC layer into a data frame, and send the data frame to the RS layer. A receive side of the MAC layer may be configured to receive a data frame from the RS layer, and obtain upper-layer network data through parsing of the data frame.

The RS layer may be configured to provide a signal mapping mechanism between the MII and the MAC layer (or between the MII and the PLS layer). For example, a transmit side of the RS layer may be configured to convert data from the MAC layer (or the PLS layer) into a signal form that complies with a standard of the MII interface. For example, a first byte of a preamble (preamble) is translated into an /S feature code, data is transparently transmitted during normal transmission, a /T feature code is inserted after a frame check sequence (frame check sequence, FCS) of a frame is transmitted, and an /I feature code is inserted after the /T feature code. A receive side of the RS layer may be configured to perform framing processing on the PCS layer through the MII (for example, a gigabit medium independent interface (Gigabit MII, GMII)), search for a frame header, transparently transmit received data to the MAC layer for processing, translate control feature code of the GMII interface, detect a link error data indication provided by the PHY layer, and the like. The MII may be configured to establish a connection between the MAC layer and the PCS layer, and perform data transmission between the MAC layer and the PCS layer. In addition, the MII may be configured to perform link state control, for example, detect a link error.

The PCS layer may be configured to perform functions such as frame header synchronization, encoding and decoding, scrambling and descrambling, and frame rate adjustment. For example, a transmit side of the PCS layer may be configured to perform the foregoing processing on data received from a GMII bus and then send processed data to another sublayer of the PHY layer, and a receive side of the PCS layer may be configured to perform the foregoing processing on data from the another sublayer of the PHY layer and then send processed data to the GMII bus.

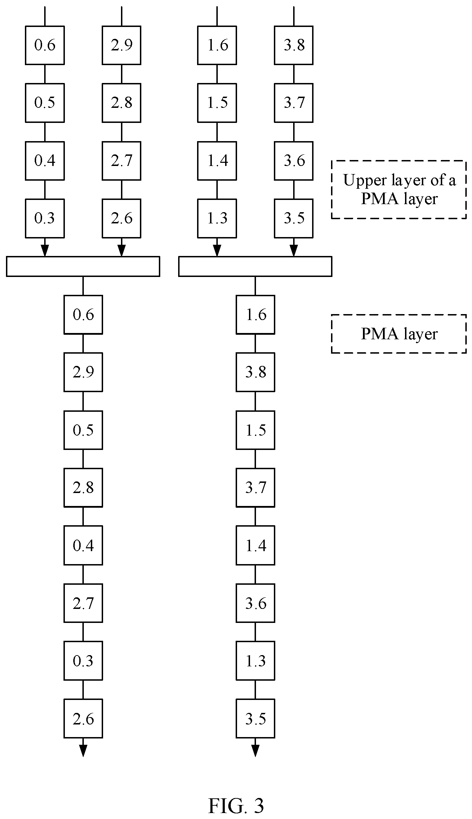

The PMA layer may be configured to perform bit-level multiplexing (bit-level multiplexing), bit width conversion (bit gearbox), bit order reverse (bit order reverse), clock and data asynchronous processing, and the like. For example, a transmit side of the PMA layer may be configured to process data from an upper layer (for example, the PCS layer) and then send processed data to the PMD layer, and a receive side of the PMA layer may be configured to perform cross-asynchronous processing on data from the PMD layer and then send processed data to the upper layer for subsequent operations. For example, as shown in FIG. 3, a data form of the PHY layer may be a data stream, an upper layer of the PMA layer may include n data streams (for example, four data streams in the figure), and the PMA layer may include m data streams (for example, two data streams in the figure), where n is greater than m. In a process in which the upper layer performs corresponding processing on the data and then sends processed data to the PMA layer, a first data stream of the upper layer is 0.6, 0.5, 0.4, and 0.3, a second data stream is 2.9, 2.8, 2.7, and 2.6, a third data stream is 1.6, 1.5, 1.4, and 1.3, and a fourth data stream is 3.8, 3.7, 3.6, and 3.5. That the PMA layer performs bit (bit)-level multiplexing means that the PMA layer converts data of the four data streams from the upper layer into the two data streams of the PMA layer for transmission. A first data stream of the PMA is 0.6, 2.9, 0.5, 2.8, 0.4, 2.7, 0.3 and 2.6, and a second data stream is 1.6, 3.8, 1.5, 3.7, 1.4, 3.6, 1.3 and 3.5. That the PMA layer performs bit width conversion means converting a bit width of data from an upper-layer bit width (for example, 80 bits) to a bit width (for example, 64 bits) of the PMA layer. That the PMA layer performs bit order reverse means that the PMA layer indicates a transmission sequence of a plurality of pieces of bit data at the PMD layer.

The PMD layer may be configured to perform mutual conversion between parallel data and serial data, and a circuit configured to perform a function of the PMD layer may also be referred to as a serializer/deserializer (serializer/deserializer, serdes). For example, a transmit side of the PMD layer may be configured to convert parallel data into serial data, and a receive side of the PMD layer may be configured to convert serial data into parallel data.

After the basic concepts of embodiments of this application are described, specific content of embodiments of this application is described.

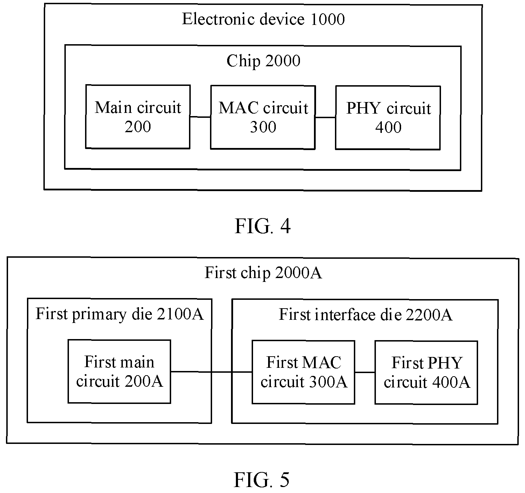

An embodiment of this application provides an electronic device. As shown in FIG. 4, the electronic device 1000 includes a housing (not shown in the figure) and a processing apparatus. The processing apparatus includes a printed circuit board (printed circuit board, PCB) (not shown in the figure) and a chip 2000. The chip 2000 includes a main circuit 200, a MAC circuit 300, and a PHY circuit 400. The main circuit 200 may include a circuit configured to perform a control function, a processing function, or a computing function, may include a circuit configured to perform a function of sending and receiving data in a communication network, or may include another circuit. This is not limited in embodiments of this application. The MAC circuit 300 may be a circuit configured to perform a MAC layer function, and the PHY circuit 400 may be a circuit configured to perform a PHY layer function. For example, the chip 2000 is a chiplet technology chip.

In some possible implementations, the chip 2000 in FIG. 4 may split the main circuit 200 into one die, and split the MAC circuit 300 and the PHY circuit 400 into another die.

In some examples, the chip 2000 may be a first chip 2000A shown in FIG. 5. The first chip 2000A includes a first primary die 2100A and a first interface die 2200A. The first primary die 2100A includes a first main circuit 200A, and the first interface die 2200A includes a first MAC circuit 300A and a first PHY circuit 400A. The first main circuit 200A is coupled to the first MAC circuit 300A, and the first MAC circuit 300A is coupled to the first PHY circuit 400A. The first primary die 2100A uses an advanced manufacturing process, and the first interface die 2200A uses a mature manufacturing process, so that hardware costs are low. In addition, the first primary die 2100A may be used together with a plurality of first interface dies 2200A, and a quantity of first primary dies 2100A and a quantity of first interface dies 2200A may be selected based on a scenario, so that design flexibility is high.

However, the first chip 2000A shown in FIG. 5 has the following problems:

First, the first PHY circuit 400A includes a circuit relevant to functional logic (configured to be coupled to a link on which a function corresponding to the circuit is located), for example, a circuit configured to perform a PCS layer function. In addition, the first PHY circuit 400A includes a circuit irrelevant to functional logic (configured to be coupled to a link on which any one of a plurality of functions is located), for example, a circuit configured to perform a PMA layer function and a circuit configured to perform a PMD layer function. The first MAC circuit 300A is a circuit relevant to functional logic. Because the circuit relevant to functional logic and the circuit irrelevant to functional logic are coupled on the first interface die 2200A (for example, a circuit that has a bandwidth of 56 Gbit/s and that is configured to perform a PMD layer function is coupled to the first MAC circuit 300A that has a bandwidth of 400 Gbit/s), in a modular device scenario, there is an external board routing crossover issue for the first chip 2000A or an internal routing crossover issue for the first chip 2000A, which increases hardware costs and is not conducive to reuse of the first primary die 2100A with the plurality of first interface dies 2200A. The following uses a modular switch machine scenario as an example to describe this problem.

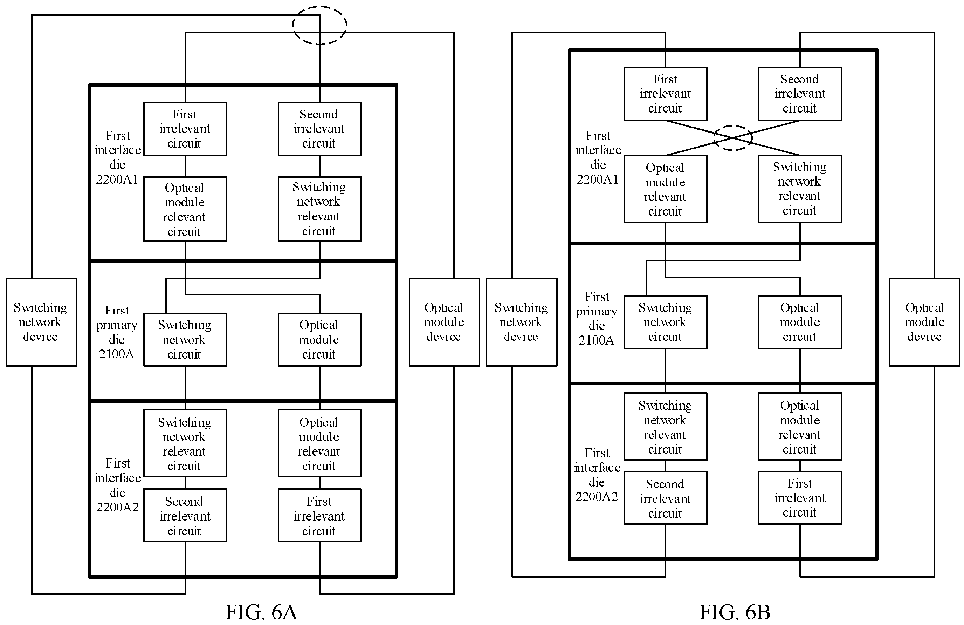

As shown in FIG. 6A, the first main circuit 200A in the first primary die 2100A includes an optical module circuit and a switching network circuit. The optical module circuit refers to a packet processing circuit on an optical module side, and the switching network circuit refers to a packet processing circuit on a switching network side. A first interface die 2200A1 and a first interface die 2200A2 each include a first irrelevant circuit, a second irrelevant circuit, an optical module relevant circuit, and a switching network relevant circuit. Both the first irrelevant circuit and the second irrelevant circuit refer to circuits (for example, a circuit configured to perform the PMA layer function and a circuit configured to perform the PMD layer function) that are irrelevant to functional logic of the optical module and the switching network. In other words, the first irrelevant circuit and the second irrelevant circuit may be configured to be coupled to a link on which the optical module is located, or may be configured to be coupled to a link on which the switching network is located. The optical module relevant circuit is a circuit relevant to functional logic of the optical module (for example, a circuit configured to perform the PCS layer function). In other words, the optical module relevant circuit is configured to be coupled to a link on which the optical module is located. The switching network relevant circuit refers to a circuit relevant to functional logic of the switching network. In other words, the switching network relevant circuit is configured to be coupled to a link on which the switching network is located. Both the first irrelevant circuit in the first interface die 2200A1 and the optical module circuit in the first primary die 2100A are coupled to the optical module relevant circuit in the first interface die 2200A1, so that the optical module circuit in the first primary die 2100A may be coupled to an external optical module device through the optical module relevant circuit and the first irrelevant circuit in the first interface die 2200A1. Both the second irrelevant circuit in the first interface die 2200A1 and the switching network circuit in the first primary die 2100A are coupled to the switching network relevant circuit in the first interface die 2200A1, so that the switching network circuit in the first primary die 2100A may be coupled to an external switching network device through the switching network relevant circuit and the second irrelevant circuit in the first interface die 2200A1. For a coupling relationship between circuits in the second interface die 2200A2, refer to a coupling relationship (as shown in FIG. 6A) between circuits in the first interface die 2200A1. Details are not described herein again in embodiments of this application. Generally, the first interface dies 2200 are produced with a same structure. Because the first interface die 2200A1 and the first interface die 2200A2 have a same structure, in actual use, the optical module relevant circuit in the first interface die 2200A1 and the optical module relevant circuit in the first interface die 2200A2 cannot both be disposed on a same side of the optical module circuit in the first main die 2100A. For example, in FIG. 6A, the optical module circuit is located on a right side, the optical module relevant circuit of the first interface die 2200A2 is located on the right side, and the optical module relevant circuit of the second interface die 2200A1 is located on a left side. As shown by the dashed circle shown in FIG. 6A, this causes a routing path between the first irrelevant circuit of the first interface die 2200A1 and the optical module device to cross a routing path between the second irrelevant circuit of the first interface die 2200A1 and the switching network device.

As shown in FIG. 6B, unlike in FIG. 6A, for the first interface die 2200A1 and the first interface die 2200A2, both the first irrelevant circuit and the second irrelevant circuit may be coupled to the optical module relevant circuit and the switching network relevant circuit through a switch. In actual use, the conduction manner of the switch is as shown in FIG. 6B. The optical module relevant circuit in the first interface die 2200A1 is coupled to the second irrelevant circuit, so that the optical module circuit in the first primary die 2100A may be coupled to the external optical module device through the optical module relevant circuit and the second irrelevant circuit in the first interface die 2200A1. The switching network relevant circuit in the first interface die 2200A1 is coupled to the first irrelevant circuit, so that the switching network circuit in the first primary die may be coupled to the external switching network device through the switching network relevant circuit and the first irrelevant circuit in the first interface die 2200A1. Although no external board routing crossover occurs for the first chip, as shown by the dashed circle shown in FIG. 6B, internal routing crossover occurs for the first interface die 2200A1.

Second, the first interface die 2200A uses the mature manufacturing process, and a large quantity of circuits in the first chip 2000A are split onto the first interface die 2200A. These circuits cannot benefit from the advanced manufacturing process of the first primary die 2100A (where the advanced manufacturing process provides better chip performance than the mature manufacturing process). Therefore, performance of the first chip 2000A is degraded.

In some other possible implementations, the chip 2000 in FIG. 4 may split the main circuit 200 and the MAC circuit 300 into one die, and split the PHY circuit 400 into another die.

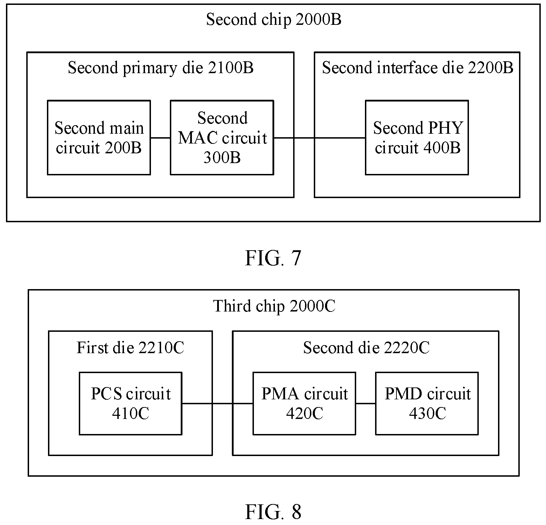

In some examples, the chip 2000 may be a second chip 2000B shown in FIG. 7. The second chip 2000B includes a second primary die 2100B and a second interface die 2200B. The second primary die 2100B includes a second main circuit 200B and a second MAC circuit 300B, and the second interface die 2200B includes a second PHY circuit 400B. The second main circuit 200B is coupled to the second MAC circuit 300B, and the second MAC circuit 300B is coupled to the second PHY circuit 400B. The second primary die 2100B uses the advanced manufacturing process, and the second interface die 2200B uses the mature manufacturing process, so that hardware costs are low. In addition, the second primary die 2100B may be used together with a plurality of second interface dies 2200B, and a quantity of second primary dies 2100B and a quantity of second interface dies 2200B may be selected based on a scenario, so that design flexibility is high.

However, the second chip 2000B shown in FIG. 7 has the following problems:

First, the second PHY circuit 400B includes a circuit relevant to functional logic (for example, a circuit configured to perform a PCS layer function) and a circuit irrelevant to functional logic (for example, a circuit configured to perform a PMA layer function and a circuit configured to perform a PMD layer function). Because the circuit relevant to functional logic and the circuit irrelevant to functional logic are coupled on the second interface die 2200B, in a modular device scenario, there is an external board routing crossover issue for the second chip 2000B or an internal routing crossover issue for the second chip 2000B, which increases hardware costs and is not conducive to reuse of the second primary die 2100B with the plurality of second interface dies 2200B. For details about this problem, refer to the problem corresponding to the first chip 2000A shown in FIG. 5. Details are not described in embodiments of this application again.

Second, the second interface die 2200B uses the mature manufacturing process, and a large quantity of circuits in the second chip 2000B are split onto the second interface die 2200B. The circuits cannot benefit from the advanced manufacturing process of the second primary die 2100B (where the advanced manufacturing process provides better chip performance than the mature manufacturing process). Therefore, performance of the second chip 2000B is degraded.

In still other possible implementations, the chip 2000 in FIG. 4 may split a PCS circuit in the PHY circuit 400 into one die, and split a PMA circuit and a PMD circuit in the PHY circuit 400 into another die. The PCS circuit is configured to perform the PCS layer function, the PMA circuit is configured to perform the PMA layer function, and the PMD circuit is configured to perform the PMD layer function.

In some examples, the chip 2000 may be a third chip 2000C shown in FIG. 8. The third chip 2000C includes a first die 2210C and a second die 2220C, the first die 2210C includes a PCS circuit 410C, and the second die 2220C includes a PMA circuit 420C and a PMD circuit 430C. The PCS circuit 410C of the first die 2210C is coupled to the PMA circuit 420C of the second die 2220C, and the PMA circuit 420C is coupled to the PMD circuit 430C.

For example, clock domains of the first die 2210C and the second die 2220C are different, and the second die 2220C may perform clock domain conversion through the PMA circuit 420C. For example, the PMA circuit 420C may be configured to perform clock domain conversion of data between a clock domain of the PCS circuit 410C and a clock domain of the PMD circuit 430C, the clock domain of the PCS circuit 410C may be the clock domain of the first die 2210C, and the clock domain of the PMD circuit 430C may be the clock domain of the second die 2220C.

In this embodiment of this application, the third chip 2000C shown in FIG. 8 has the following effect:

First, a die partitioning manner in a chiplet is provided. A plurality of circuits are split onto different dies, and different dies may use different manufacturing processes. For example, the second die 2220C may use the mature manufacturing process, so that hardware costs are low.

Second, the first die 2210C may be used together with a plurality of second dies 2220C, and a quantity of first dies 2210C and a quantity of second dies 2220C may be selected based on a scenario, so that design flexibility is high.

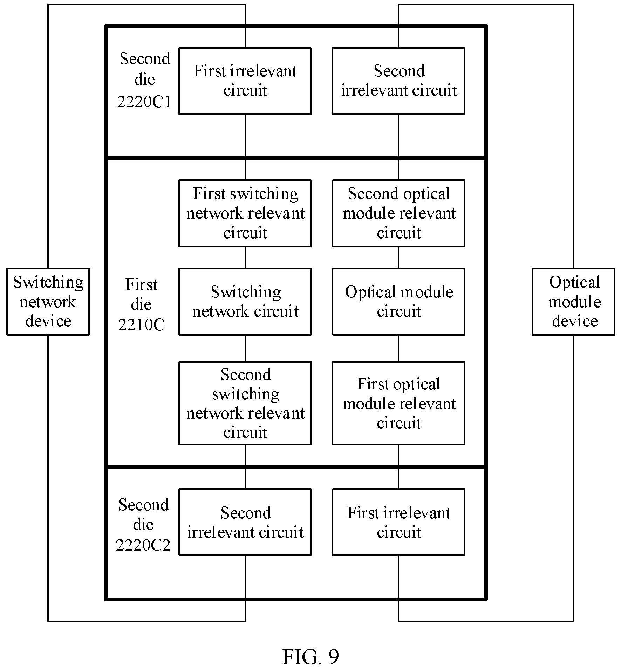

Third, the second die 2220C includes only the PMA circuit 420C and the PMD circuit 430C that are irrelevant to functional logic, so that flexible reuse between different dies can be implemented at low costs. For example, the PMA circuit 420C and the PMD circuit 430C are circuits irrelevant to functional logic, and are configured to be coupled to a link on which any one of a plurality of functions is located. The PCS circuit 410C is a circuit relevant to the functional logic, and is configured to be coupled to a link on which a function corresponding to the PCS circuit 410C is located. A circuit relevant to functional logic and a circuit irrelevant to functional logic are split onto different dies. Taking a modular device scenario as an example, no external board routing crossover occurs for the third chip 2000C, and no internal routing crossover occurs for the third chip 2000C. This can reduce hardware costs, facilitate reuse of the first die 2210C with the plurality of second dies 2220C, and also resolve a problem of a disordered design of die partitioning caused by a design of the circuit relevant to functional logic together with the circuit irrelevant to functional logic on a same die. The following uses the modular switch machine scenario as an example to describe the content. For example, as shown in FIG. 9, both a second die 2220C1 and a second die 2220C2 include a first irrelevant circuit and a second irrelevant circuit. The first irrelevant circuit and the second irrelevant circuit may be configured to be coupled to a link on which an optical module is located, and may also be configured to be coupled to a link on which a switching network is located. The first irrelevant circuit includes the PMA circuit 420C and the PMD circuit 430C, and the second irrelevant circuit includes the PMA circuit 420C and the PMD circuit 430C. The first die 2210C includes a switching network circuit, a first switching network relevant circuit, a second switching network relevant circuit, an optical module circuit, a first optical module relevant circuit, and a second optical module relevant circuit. The first optical module relevant circuit and the second optical module relevant circuit are configured to be coupled to the link on which the optical module is located, and the first switching network relevant circuit and the second switching network relevant circuit are configured to be coupled to the link on which the switching network is located. The first switching network relevant circuit, the second switching network relevant circuit, the first optical module relevant circuit, and the second optical module relevant circuit each include the PCS circuit 410C. The switching network circuit is configured to be coupled to an external switching network device through the first switching network relevant circuit and the first irrelevant circuit in the second die 2220C1, and the switching network circuit is further configured to be coupled to the external switching network device through the second switching network relevant circuit and the second irrelevant circuit in the second die 2220C2. The optical module circuit is configured to be coupled to an external optical module device through the second optical module relevant circuit and the second irrelevant circuit in the second die 2220C1, and the optical module circuit is further configured to be coupled to the external optical module device through the first optical module relevant circuit and the first irrelevant circuit in the second die 2220C2. Because the first irrelevant circuit and the second irrelevant circuit may be coupled to a link on which any function is located, there is no problem of external board routing crossover or internal routing crossover. When the first die 2210C needs to be used together with a plurality of second dies 2220C, routing crossover can be reduced significantly, and hardware complexity can be reduced more significantly.

In some possible implementations, the PCS circuit 410C, the PMA circuit 420C, and the PMD circuit 430C in FIG. 8 each include a transmit side and a receive side.

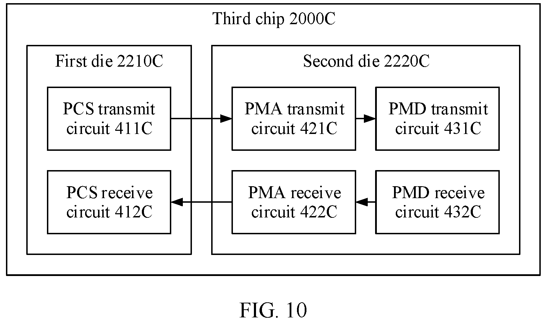

In some examples, as shown in FIG. 10, the PCS circuit 410C includes a PCS transmit circuit 411C and a PCS receive circuit 412C, the PMA circuit 420C includes a PMA transmit circuit 421C and a PMA receive circuit 422C, and the PMD circuit 430C includes a PMD transmit circuit 431C and a PMD receive circuit 432C. The PCS transmit circuit 411C is coupled to the PMA transmit circuit 421C, and the PMA transmit circuit 421C is coupled to the PMD transmit circuit 431C. The PCS receive circuit 412C is coupled to the PMA receive circuit 422C, and the PMA receive circuit 422C is coupled to the PMD receive circuit 432C.

For example, the PCS transmit circuit 411C performs corresponding processing (for example, encoding) on data, and sends processed data to the PMA transmit circuit 421C. The PMA transmit circuit 421C performs corresponding processing (for example, performs clock domain conversion) on the data, and sends processed data to the PMD transmit circuit 431C. The PMD transmit circuit 431C performs corresponding processing on the data (for example, converts parallel data into serial data), and sends processed data to a medium, where the medium includes but is not limited to a PCB routing, a copper cable, an optical fiber, and the like.

For example, the PMD receive circuit 432C receives data from a medium, performs corresponding processing on the data (for example, converts serial data into parallel data), and sends processed data to the PMA receive circuit 422C. The PMA receive circuit 422C performs corresponding processing (for example, performs clock domain conversion) on the data, and sends processed data to the PCS circuit 410C. The PCS circuit 410C performs corresponding processing (for example, decoding) on the data.

For example, the PMA transmit circuit 421C includes a plurality of lanes (lane), the PMD transmit circuit 431C includes a plurality of lanes, and each lane in the PMA transmit circuit 421C is coupled to each lane in the PMD transmit circuit 431C in a one-to-one correspondence. Each lane in the PMD transmit circuit 431C may include a plurality of parallel channels and one serial channel, and each lane in the PMD transmit circuit 431C is configured to convert data in the parallel channel into data in the serial channel. The PMA receive circuit 422C includes a plurality of lanes (lane), the PMD receive circuit 432C includes a plurality of lanes, and each lane in the PMA receive circuit 422C is coupled to each lane in the PMD receive circuit 432C in a one-to-one correspondence. Each lane in the PMD receive circuit 432C may include a plurality of parallel channels and one serial channel, and each lane in the PMD receive circuit 432C is configured to convert data in the serial channel into data in the parallel channel.

In this embodiment of this application, the PCS circuit 410C, the PMA circuit 420C, and the PMD circuit 430C each include a transmit side and a receive side, and the PMA transmit circuit 421C, the PMA receive circuit 422C, the PMD transmit circuit 431C, and the PMD receive circuit 432C are all located on dies different from the PCS transmit circuit 411C and the PCS receive circuit 412C. This can reduce hardware costs, enhance design flexibility, and facilitate reuse of the first die 2210C with the plurality of second dies 2220C.

In some possible implementations, the third chip 2000C in FIG. 8 may include a third main circuit and a third MAC circuit. The following describes a manner of splitting the third main circuit and the third MAC circuit onto the first die 2210C and the second die 2220C.

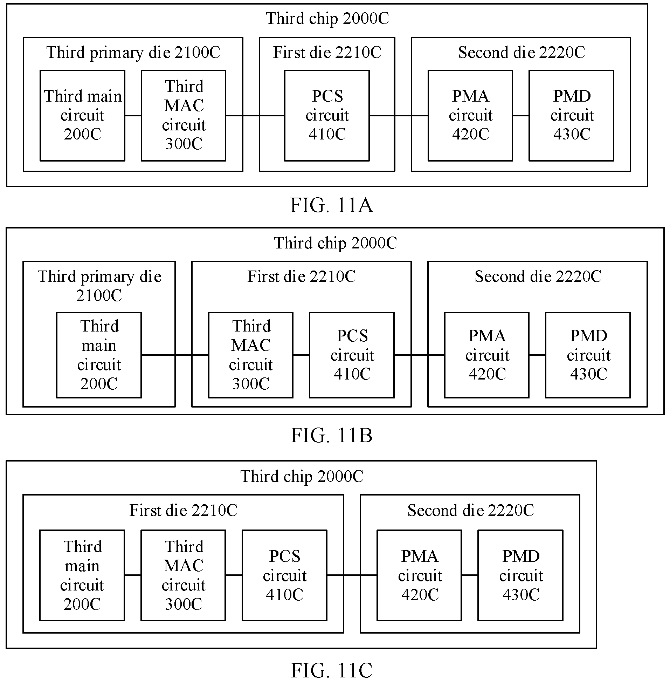

In some examples, as shown in FIG. 11A, the third chip 2000C further includes a third primary die 2100C, a third main circuit 200C and a third MAC circuit 300C are disposed in the third primary die 2100C, the third main circuit 200C is coupled to the third MAC circuit 300C, and the third MAC circuit 300C is coupled to the PCS circuit 410C. In this embodiment of this application, the third primary die 2100C in which the third main circuit 200C is located uses the advanced manufacturing process, to decouple as many circuits as possible from the third primary die 2100C. The first die 2210C and the second die 2220C in which these circuits are located use the mature manufacturing processes, so that costs can be reduced, design flexibility can be improved, and problems such as external board routing crossover and internal routing crossover can also be resolved.

In some other examples, as shown in FIG. 11B, the third chip 2000C further includes a third primary die 2100C, a third main circuit 200C is disposed in the third primary die 2100C, a third MAC circuit 300C is disposed in the first die 2210C, the third main circuit 200C is coupled to the third MAC circuit 300C, and the third MAC circuit 300C is coupled to the PCS circuit 410C. In this embodiment of this application, the third MAC circuit 300C is further decoupled from the third primary die 2100C, thereby further reducing costs and improving design flexibility. In addition, problems such as external board routing crossover and internal routing crossover can be resolved.

In some other examples, as shown in FIG. 11C, both a third main circuit 200C and a third MAC circuit 300C are disposed in the first die 2210C, the third main circuit 200C is coupled to the third MAC circuit 300C, and the third MAC circuit 300C is coupled to the PCS circuit 410C. In this embodiment of this application, the first die 2210C in which the third main circuit 200C is located uses the advanced manufacturing process, and the second die 2220C uses the mature manufacturing process. More circuits are disposed on the first die 2210C as much as possible, so that performance of the third chip 2000C can be improved, and a package size can also be reduced.

In some possible implementations, the third MAC circuit 300C shown in FIG. 11A, FIG. 11B, or FIG. 11C includes a transmit side and a receive side.

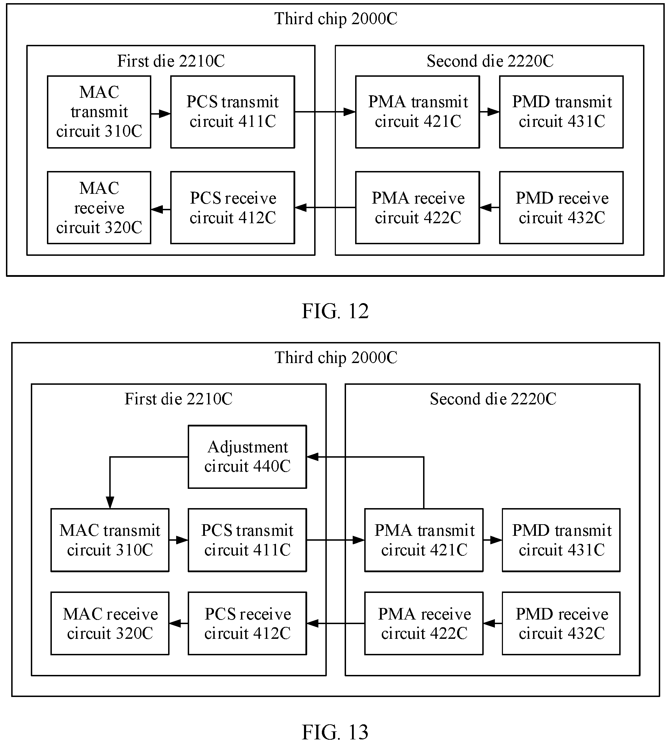

In some examples, an example in which the third MAC circuit 300C is disposed on the first die 2210C is used. As shown in FIG. 12, the third MAC circuit 300C includes a MAC transmit circuit 310C and a MAC receive circuit 320C. The MAC transmit circuit 310C is coupled to the PCS transmit circuit 411C, and the MAC receive circuit 320C is coupled to the PCS receive circuit 412C.

For example, the MAC transmit circuit 310C performs corresponding processing on data, and sends processed data to the PCS transmit circuit 411C. For example, the MAC receive circuit 320C receives data from the PCS receive circuit 412C, and performs corresponding processing on the data.

In this embodiment of this application, the third MAC circuit 300C includes the transmit side and the receive side, and both the MAC transmit circuit 310C and the MAC receive circuit 320C are disposed in the first die 2210C. Therefore, hardware costs are low and design flexibility is high. If the first die 2210C uses the advanced manufacturing process, the MAC transmit circuit 310C and the MAC receive circuit 320C may also use the advanced manufacturing process, to improve performance of the third chip 2000C.

In some possible implementations, because clock domains of the first die 2210C and the second die 2220C are different, there is a bandwidth deviation, and the first die 2210C may have a bandwidth acceleration ratio, and a data transmission bandwidth of the first die 2210C is greater than a data transmission bandwidth of the second die 2220C. Therefore, a buffer (buffer/cache) or the like may be disposed in the PMA transmit circuit 421C for buffering.

In an example, as shown in FIG. 13, the first die 2210C or the second die 2220C further includes an adjustment circuit 440C, and the PMA transmit circuit 421C further includes a buffer (not shown in the figure). The MAC transmit circuit 310C is coupled to the adjustment circuit 440C, and the adjustment circuit 440C is coupled to the PMA transmit circuit 421C. The buffer is configured to store, in a process in which the MAC transmit circuit 310C sends data to the PMA transmit circuit 421C through the PCS transmit circuit 411C, the data. The PMA transmit circuit 421C is configured to control, through the adjustment circuit 440C when an amount of the data stored in the buffer is greater than a first preset value, the MAC transmit circuit 310C to reduce a bandwidth for sending data.

For example, the buffer may be a first in first out (first in first out, FIFO) buffer. For example, a size of the buffer may be determined based on a quantity of resources that can be provided by the second die 2220C. Alternatively, the size of the buffer may be determined based on a bit width of a parallel channel of a lane of the PMD transmit circuit 431C. For example, the size of the buffer is 4 times, 8 times, 16 times, 32 times, 64 times, or 128 times the bit width of the parallel channel. Alternatively, the size of the buffer may be determined based on a length of a transmission path between the first die 2210C and the second die 2220C. For example, the first die 2210C and the second die 2220C are packaged on a PCB, and the size of the buffer is determined based on a length of a transmission path between the PCS circuit 410C and the PMA transmit circuit 421C.

For example, a manner in which the PMA transmit circuit 421C controls, through the adjustment circuit 440C, the MAC transmit circuit 310C to reduce the bandwidth may be as follows: When the amount of the data stored in the buffer is greater than the first preset value, the PMA transmit circuit 421C sends capacity information to the adjustment circuit 440C, where the capacity information indicates that the amount of the data stored in the buffer is greater than the first preset value. The adjustment circuit 440C sends first indication information to the MAC transmit circuit 310C based on the capacity information, and the MAC transmit circuit 310C reduces, based on the first indication information, the bandwidth for sending data. Alternatively, a manner in which the PMA transmit circuit 421C controls, through the adjustment circuit 440C, the MAC transmit circuit 310C to reduce the bandwidth may be as follows: The PMA transmit circuit 421C sends, to the adjustment circuit 440C at a preset time interval, an amount of data stored in the buffer, and the adjustment circuit 440C sends second indication information to the MAC transmit circuit 310C when the data amount is not greater than the first preset value. The second indication information indicates that the MAC transmit circuit 310C does not need to reduce the bandwidth for sending data. When the data amount is greater than the first preset value, the adjustment circuit 440C stops sending the second indication information. If the MAC transmit circuit 310C still does not receive the second indication information when the preset time interval elapses, the bandwidth for sending the data is reduced.

In this embodiment of this application, the adjustment circuit 440C is disposed, and when the amount of the data stored in the buffer of the PMA transmit circuit 421C is greater than the first preset value, a bandwidth of a transmit side of the first die 2210C is adjusted, to alleviate a problem that the first die 2210C has an excessively large data traffic and the second die 2220C cannot process the data in time.

In some possible implementations, the third chip 2000C in FIG. 8 further includes a functional circuit. The functional circuit may be split onto either the first die 2210C or the second die 2220C.

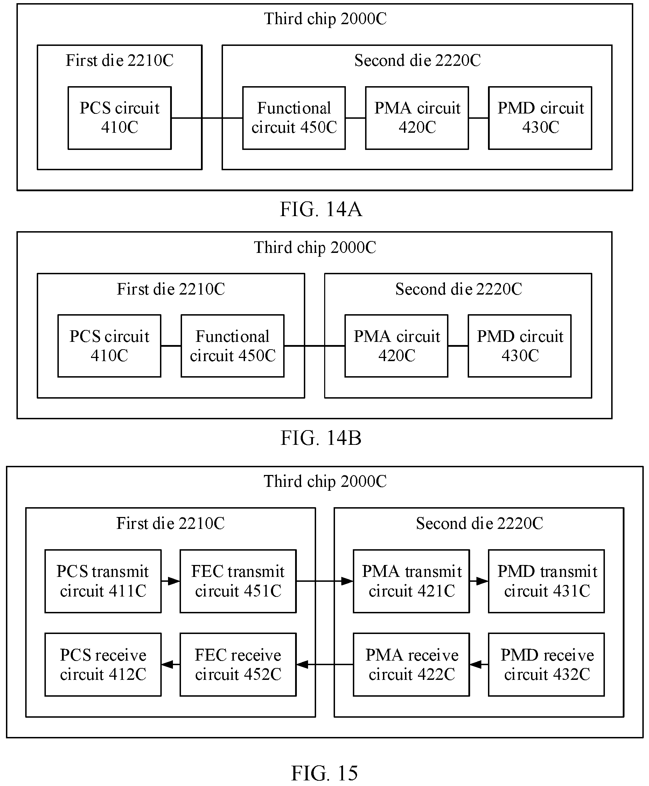

In some examples, as shown in FIG. 14A, the functional circuit 450C is disposed on the second die 2220C. As shown in FIG. 14B, the functional circuit 450C is disposed on the first die 2210C. The PCS circuit 410C is coupled to the PMA circuit 420C through the functional circuit 450C. A quantity and a specific function of the functional circuit 450C are not limited in embodiments of this application.

In this embodiment of this application, another functional circuit 450C may be further included between the PCS circuit 410C and the PMA circuit 420C. The functional circuit 450C may be disposed based on an application requirement. In this way, a function of the third chip 2000C may be more flexibly set.

In some possible implementations, the functional circuit 450C may include a pre-backpressure circuit. For example, the PCS transmit circuit 411C is coupled to the PMA transmit circuit through the pre-backpressure circuit, and the adjustment circuit 440C is further coupled to the pre-backpressure circuit. When the amount of the data stored in the buffer is greater than a second preset value, the PMA transmit circuit 421C indicates, through the adjustment circuit 440C, the pre-backpressure circuit to reduce a bandwidth used by the PCS circuit 410C to send data, where the second preset value is less than the first preset value. Optionally, a buffer circuit may be disposed in the pre-backpressure circuit.

In this embodiment of this application, when the amount of the data stored in the buffer is greater than the first preset value, the PMA transmit circuit 421C may control, through the adjustment circuit 440C, the MAC transmit circuit 310C to reduce the bandwidth for sending data. However, it takes a period of time for the PCS circuit 410C to reduce the bandwidth for sending data as the MAC transmit circuit 310C reduces the bandwidth for sending data. In this period of time, if the buffer becomes full and the PCS transmit circuit 411C still sends data to the PMA transmit circuit 421C at a large bandwidth, the PMA transmit circuit 421C cannot process the data in time. When the amount of the data stored in the buffer is greater than the second preset value, the adjustment circuit 440C and the pre-backpressure circuit are used to reduce the bandwidth of the PCS transmit circuit 411C for sending data. When the amount of the data stored in the buffer is greater than the first preset value, the adjustment circuit 440C is used to reduce the bandwidth for the MAC transmit circuit 310C to send data. In this case, a problem that the PMA transmit circuit 421C cannot process the data in time when the buffer becomes full and the PCS transmit circuit 411C still sends data to the PMA transmit circuit 421C at a large bandwidth is alleviated.

In some possible implementations, the functional circuit 450C may include a forward error correction (forward error correction, FEC) circuit. For example, the FEC circuit is configured to perform secondary encoding on data encoded by the PCS circuit 410C, so that a specific quantity of bit errors can be automatically corrected, and a bit error rate can be reduced. For example, the FEC circuit may be a reed solomon forward error correction (reed solomon forward error correction, RSFEC) circuit, or an FEC circuit that uses other coding. This is not limited in embodiments of this application.

In this embodiment of this application, the FEC circuit is included between the PCS circuit 410C and the PMA circuit 420C, so that a bit error rate can be reduced. If the FEC circuit is disposed on the second die 2220C, and the second die 2220C uses the mature manufacturing process, costs of the third chip 2000C can be further reduced. If the FEC circuit is disposed on the first die 2210C, the first die 2210C may use the advanced manufacturing process, or the FEC circuit may also use the advanced manufacturing process, to improve performance of the third chip 2000C.

In some possible implementations, the FEC circuit in the functional circuit 450C includes a transmit side and a receive side.

In some examples, an example in which the FEC circuit is disposed on the first die 2210C is used. As shown in FIG. 15, the FEC circuit includes an FEC transmit circuit 451C and an FEC receive circuit 452C. The PCS transmit circuit 411C is coupled to the PMA transmit circuit 421C through the FEC transmit circuit 451C. The PCS receive circuit 412C is coupled to the PMA receive circuit 422C through the FEC receive circuit 452C.

For example, the FEC transmit circuit 451C receives data from the PCS transmit circuit 411C, and the FEC transmit circuit 451C performs forward error correction processing on the data, and sends processed data to the PMA transmit circuit 421C. For example, the FEC receive circuit 452C receives data from the PMA receive circuit 422C, and the FEC receive circuit 452C performs forward error correction processing on the data, and sends processed data to the PCS receive circuit 412C.

In this embodiment of this application, the FEC circuit includes a transmit side and a receive side, and a bit error rate can be reduced for both a transmit link and a receive link in the third chip 2000C. If the FEC transmit circuit 451C and the FEC receive circuit 452C are disposed on the second die 2220C, and the second die 2220C uses the mature manufacturing process, costs of the third chip 2000C can be further reduced. If the FEC transmit circuit 451C and the FEC receive circuit 452C are disposed on the first die 2210C, the first die 2210C may use the advanced manufacturing process, or the FEC transmit circuit 451C and the FEC receive circuit 452C may also use the advanced manufacturing process, to improve performance of the third chip 2000C.

In some possible implementations, the PMD receive circuit 432C may adjust a performance parameter based on a forward error correction result of the FEC receive circuit 452C for data.

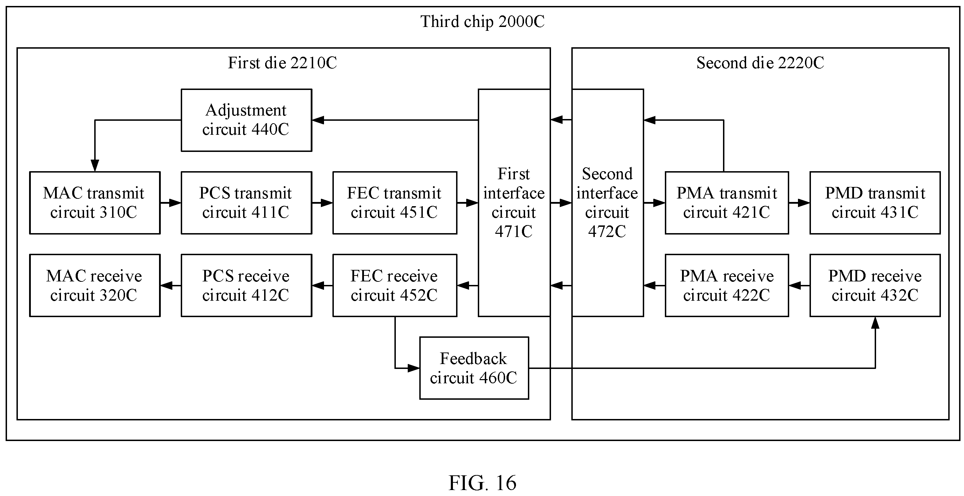

For example, as shown in FIG. 16, the first die 2210C or the second die 2220C further includes a feedback circuit 460C, the FEC receive circuit 452C is coupled to the feedback circuit 460C, and the feedback circuit 460C is coupled to the PMD receive circuit 432C. The FEC receive circuit 452C is configured to send, when a bit error rate obtained through forward error correction is not 0, bit error information to the PMD receive circuit 432C through the feedback circuit 460C, where the feedback circuit 460C is a serial interface. The PMD receive circuit 432C adjusts the performance parameter to reduce an error rate of data transmission. The FEC receive circuit 452C receives data from the PMD receive circuit 432C, and performs forward error correction on the data to obtain bit error information. The bit error information indicates a bit error rate of the data. The PMD receive circuit 432C may be configured to adjust the performance parameter of the PMD receive circuit 432C based on the bit error information.

In this embodiment of this application, there is a large amount of bit error information that needs to be transmitted. To avoid a waste of an inter-chip bandwidth, the feedback circuit 460C for transmitting the bit error information is set as a serial interface, and the bit error information is sent in a form of serial data, so that a bandwidth for data transmission between dies can be reduced.

In some possible implementations, as shown in FIG. 16, the first die 2210C further includes a first interface circuit 471C, and the second die 2220C further includes a second interface circuit 472C. The first interface circuit 471C is coupled to the second interface circuit 472C, and the first die 2210C is coupled to the second die 2220C through the first interface circuit 471C and the second interface circuit 472C. For example, both the first interface circuit 471C and the second interface circuit 472C are low-delay interfaces, and delays of both the first interface circuit 471C and the second interface circuit 472C are less than a preset threshold. For example, the preset threshold may be 20 nanoseconds.

In this embodiment of this application, the first die 2210C is coupled to the second die 2220C through the first interface circuit 471C and the second interface circuit 472C, and the first die 2210C and the second die 2220C may communicate with each other through the first interface circuit 471C and the second interface circuit 472C, to establish a basis for communication between the first die 2210C and the second die 2220C. Further, low-delay interfaces are selected as the first interface circuit 471C and the second interface circuit 472C, so that a delay of communication between the first die 2210C and the first die 2210C can be reduced, and performance of the third chip 2000C can be improved.

In several embodiments provided in this application, it should be understood that the disclosed electronic device, chip system, and chip may be implemented in other manners. For example, the described embodiments are merely an example. For example, the circuit division is merely logical function division and may be other division in actual implementation, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A chip, wherein the chip comprises a first die and a second die, the first die comprises a physical coding sublayer PCS circuit, and the second die comprises a physical medium attachment PMA sublayer circuit and a physical medium dependent PMD circuit; and
the PCS circuit of the first die is coupled to the PMA circuit of the second die, and the PMA circuit is coupled to the PMD circuit.

2. The chip according to claim 1, wherein the PCS circuit comprises a PCS transmit circuit and a PCS receive circuit, the PMA circuit comprises a PMA transmit circuit and a PMA receive circuit, and the PMD circuit comprises a PMD transmit circuit and a PMD receive circuit;
the PCS transmit circuit is coupled to the PMA transmit circuit, and the PMA transmit circuit is coupled to the PMD transmit circuit; and
the PCS receive circuit is coupled to the PMA receive circuit, and the PMA receive circuit is coupled to the PMD receive circuit.

3. The chip according to claim 2, wherein the first die or the second die further comprises a functional circuit; and
the PCS circuit is coupled to the PMA circuit through the functional circuit.

4. The chip according to claim 3, wherein the functional circuit comprises a forward error correction FEC circuit.

5. The chip according to claim 4, wherein the FEC circuit comprises an FEC transmit circuit and an FEC receive circuit;
the PCS transmit circuit is coupled to the PMA transmit circuit through the FEC transmit circuit; and
the PCS receive circuit is coupled to the PMA receive circuit through the FEC receive circuit.

6. The chip according to claim 5, wherein the first die or the second die further comprises a feedback circuit, the FEC receive circuit is coupled to the feedback circuit, and the feedback circuit is coupled to the PMD receive circuit; and
the FEC receive circuit is configured to send, when a bit error rate obtained through forward error correction is not 0, bit error information to the PMD receive circuit through the feedback circuit, wherein the feedback circuit is a serial interface.

7. The chip according to any one of claims 2 to 6, wherein the first die further comprises a medium access control MAC circuit, and the MAC circuit is coupled to the PCS circuit.

8. The chip according to claim 7, wherein the MAC circuit comprises a MAC transmit circuit and a MAC receive circuit; and
the MAC transmit circuit is coupled to the PCS transmit circuit, and the MAC receive circuit is coupled to the PCS receive circuit.

9. The chip according to claim 8, wherein the first die or the second die further comprises an adjustment circuit, the PMA transmit circuit further comprises a buffer, the MAC transmit circuit is coupled to the adjustment circuit, and the adjustment circuit is coupled to the PMA transmit circuit;
the buffer is configured to store, in a process in which the MAC transmit circuit sends data to the PMA transmit circuit through the PCS transmit circuit, the data; and
the PMA transmit circuit is configured to control, through the adjustment circuit when an amount of the data stored in the buffer is greater than a preset value, the MAC transmit circuit to reduce a bandwidth for sending data.

10. The chip according to any one of claims 1 to 9, wherein the first die further comprises a first interface circuit, and the second die further comprises a second interface circuit; and
the first interface circuit is coupled to the second interface circuit, and the first die is coupled to the second die through the first interface circuit and the second interface circuit.

11. A processing apparatus, wherein the apparatus comprises a printed circuit board and the chip according to any one of claims 1 to 10.

12. An electronic device, wherein the electronic device comprises a housing and the processing apparatus according to claim 11.
